# EUROPÄISCHE PATENTSCHRIFT

(11) **EP 0 873 818 B1**
(45) Veröffentlichungstag und Bekanntmachung des Hinweises auf die Patenterteilung: **02.04.2003**
(21) Anmeldenummer: 98107223.4
(22) Anmeldetag: 21.04.1998
(51) Int. Cl.: B23Q 7/02, B23Q 7/14, B23Q 3/18

(54) **Lagerichtige Ein-Nippel-Einspannung**
Correct positioning with single nipple clamping
Dispositif pour positionner correctement avec fixation par un seul nipple

(30) Priorität: 22.04.1997 DE 19716797
(43) Veröffentlichungstag der Anmeldung: 28.10.1998
(73) Patentinhaber: Stark Spannsysteme GmbH, 6840 Götzis (AT)
(72) Erfinder: Stark, Emil, jr, 6840 Götzis (AT)
(74) Vertreter: von Ahsen, Erwin-Detlef, Dipl.-Ing.

(56) Entgegenhaltungen:
- EP-A- 0 450 383
- DE-A- 3 228 827
- DE-A- 4 135 418
- JP-A- 8 011 031
- JP-A- 62 255 042

## Beschreibung

Gegenstand der vorliegenden Erfindung ist eine Vorrichtung zum Spannen und lagerichtigen Positionieren von Paletten, gemäß dem Oberbegriff des Anspruchs 1, wie z.B. aus der JP-A-08011031 bekannt.

Mit einer auf denselben Anmelder zurückgehenden Veröffentlichung ist es bereits bekannt geworden, eine Palette über mehrere Einzugsnippel mit zugeordneten Schnellspannzylindern zu halten. Die Einzugsnippel werden hierbei in die Schnellspannzylinder eingeführt, in denen sie nach unten gezogen werden. Dieses Einziehen führt dazu, daß der Einzugsnippel bzw. ein zugeordnetes Bauteil, das an der Palette befestigt ist, gegenüber dem Schnellspannzylinder zentriert wird. Die Einzugskraft ist hierbei so hoch, daß die Palette völlig sicher und unverrückbar in einer lagerichtig genau bestimmten Stellung gegenüber dem Schnellspannzylinder gehalten wird.

Es hat sich allerdings in der Praxis herausgestellt, daß es in einigen Fällen wünschenswert ist, relativ kleine Paletten zu verwenden. Diese Paletten müssen nicht mit mehreren Einzugsnippeln versehen werden, da bereits ein einziger Einzugsnippel für eine ausreichende Befestigung sorgt.

Bei dem Verwenden nur eines einzigen Einzugsnippels besteht allerdings das Problem, daß die Palette zusammen mit dem Einzugsnippel gegenüber dem Schnellspannzylinder verdreht werden kann. Bei den bisher bekannten Paletten, die mit mehreren Einzugsnippeln arbeiten, bestand diese Gefahr nicht. Hier wird eine Verdrehsicherung durch das Anbringen mehrerer Einzugsnippel erreicht.

Aufgabe der vorliegenden Erfindung ist es daher, eine Vorrichtung der eingangs genannten Art dahingehend weiterzubilden, daß eine Palette mit nur einem einzigen Einzugsnippel in einer genau definierten Lage auf dem zugeordneten Schnellspannzylinder aufgesetzt und an diesem befestigt werden kann.

Erfindungsgemäß wird diese Aufgabe durch die technische Lehre des Anspruchs 1 gelöst.

Wesentlich hierbei ist, daß die Palette nur mit einem einzigen Einzugsnippel versehen ist, und gleichzeitig eine Verdrehsicherung zwischen der Palette und dem zugeordneten Schnellspannzylinder vorhanden ist. Diese Verdrehsicherung ist in der Form von Fixierstiften ausgebildet, die eine entsprechende mechanische Festigkeit aufweisen.

Hierdurch ergibt sich der wesentliche Vorteil, daß nunmehr relativ kleine Paletten nicht wie beim Stand der Technik mit mehreren Einzugsnippeln versehen werden müssen, sondern eine wesentliche Verringerung der Kosten und Vereinfachung der Konstruktion erreicht werden kann.

Die Verdrehsicherung kann hierbei in mehreren Arten ausgebildet sein.

Eine erste Ausführungsform sieht vor, daß die Palette mit Stiften versehen ist, die sich an zugeordneten Anschlagflächen des Schnellspannzylinders anlegen. Selbstverständlich ist es ebenfalls möglich, diese Stifte an dem Schnellspannzylinder zu befestigen und die Anschlagflächen an der Palette vorzusehen.

Die Anzahl der Stifte richtet sich hierbei nach dem bei der Bearbeitung auftretenden Drehmoment. Je nach der Größe des Drehmoments können zwei, vier, sechs oder noch mehr dieser Stifte vorgesehen sein.

In einer ersten Ausführungsform ist es vorgesehen, die Stifte für die Verdrehsicherung so anzuordnen, daß eine Schwenkmöglichkeit um 90°, also jeweils um einen rechten Winkel, erreicht wird. Dazu werden die Kontaktflächen des Schnellspannzuylinders entsprechend ausgebildet, so daß durch lösen der Verdrehsicherung die Palette entsprechend verdreht werden kann. Dadurch wird eine Bearbeitungsmöglichkeit der eingespannten Werkstücke in 90° Schritten erreicht.

Wie bereits erwähnt ist es auch möglich, diese Stifte an dem Schnellspannzylinder zu befestigen und die Anschlagflächen an der Palette vorzusehen.

Eine andere Ausführungsform sieht vor, daß die Anordnung der Stifte in 120° Winkeln erfolgt. Die zugeordneten Anschlagflächen des Schnellspannzylinders werden in diesem Fall sinnvollerweise ebenfalls in 120° Winkeln angeordnet. Somit kann das zu bearbeitende Werkstück bei Bedarf in dieser Winkelteilung verdreht werden.

In einer vorteilhaften Weiterbildung der Erfindung ist vorgesehen, die Verdrehsicherung derart auszubilden, daß die Palette in mehreren Winkelstellungen auf dem Schnellspannzylinder aufgesetzt und in diesen Winkelstellungen zuverlässig gehalten werden kann. Insbesondere bei manchen Bearbeitungsschritten kann es erforderlich sein, die Palette zuerst in einer ersten Stellung zu bearbeiten, anschließend um einen bestimmten Winkel zu verdrehen, neu zu befestigen und dann wiederum zu bearbeiten. Durch eine geeignete Wahl der Winkelschritte kann die Verdrehsicherung entsprechend der Bearbeitungsvorgaben extrem genau gegenüber dem Schnellspannzylinder gehalten werden. Es sind somit beliebige Winkelverstellungen möglich.

Ein wesentlicher Vorteil des Systems aus Einzugsnippel und Schnellspannzylinder besteht darin, daß die Palette selbst in genau definierter Stellung gegenüber der Werkzeugmaschine gehalten wird. Es wird bevorzugt, wenn die Palette selbst nun geeignete Anschlag- oder Anlageflächen für das oder die zu bearbeitenden Werkstücke aufweist, so daß diese ebenfalls, sobald die Palette festgespannt ist, in genau definierter Stellung vorliegen. Ein Nachrüsten bzw. Einstellen, um Montagetoleranzen auszugleichen, kann so vermieden werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Dabei zeigt:
- Figur 1:: einen Schnitt durch eine erfindungsgemäße Vorrichtung;
- Figur 2:: eine Draufsicht auf eine erfindungsgemäße Vorrichtung mit befestigter Palette;
- Figur 3:: eine spezielle Ausführungsform der Figur 1 mit exzentrisch ausgeführten Stiften;
- Figur 4:: eine Draufsicht auf eine erfindungsgemäße Vorrichtung mit befestigter Palette nach Figur 3;
- Figur 5:: eine Draufsicht auf eine vorteilhafte Weiterbildung in einer ersten Ausführung;
- Figur 6:: eine Ansicht gemäß Figur 5 in einer zweiten Ausführung;
- Figur 7:: eine Ansicht gemäß Figur 5 in einer weiteren Ausführung;
- Figur 8:: eine Ansicht gemäß Figur 5 in einer vierten Ausführung;
- Figur 9:: eine fünfte Ausführung in einer Ansicht gemäß Figur 5.

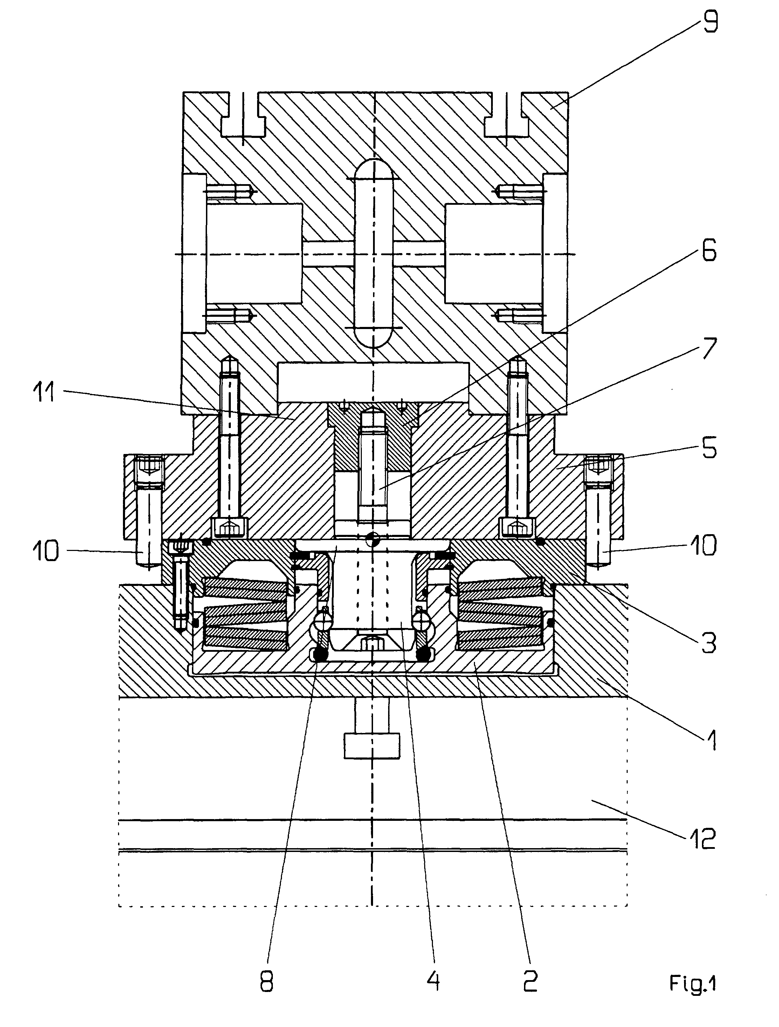

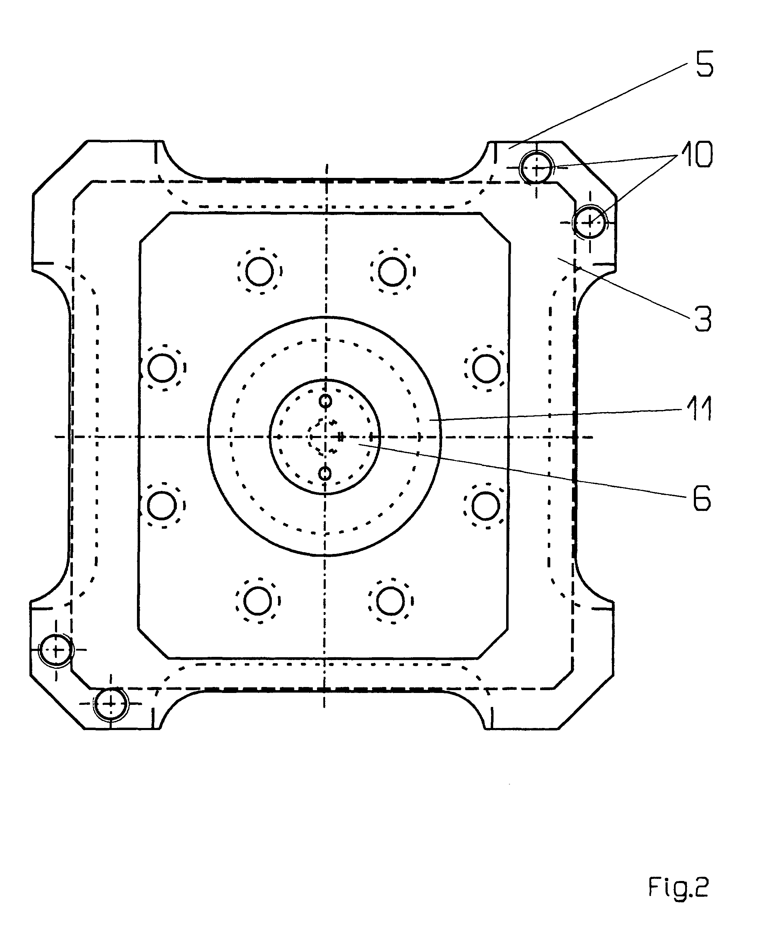

Die Figuren 1 und 2 zeigen eine Ausführungsform der vorliegenden Erfindung. Hierbei ist eine Platte 1 mit einem oder mehreren Schnellspannzylindern 2 mit zugeordneten Deckeln 3 versehen. Die Deckel 3 werden von jeweils einem Einzugsnippel 4 durchgriffen, der seinerseits in einer Palette 5 über einen Gegenhalter 6 und eine Gewindestange 7 befestigt ist. Der Einzugsnippel 4 ist hierbei mit einem Ringflansch 8 versehen, der sich in einer zugeordneten Ausnehmung des Deckels 3 anlegt und auf diese Weise eine Zentrierung des Einzugsnippels und damit der zugeordneten Palette 5 sicherstellt.

An der Palette 5 in ein Werkstück 9 befestigt, das im gezeigten Ausführungsbeispiel über einen Ansatz 11 der Palette gegenüber dieser zentriert ist. Das Werkstück 9 liegt somit in genau definierter Lage gegenüber der Platte 1 vor.

Die Verdrehsicherung zwischen der Palette 5 und dem Schnellspannzylinder 2 erfolgt im gezeigten Ausführungsbeispiel über mehrere Stifte 10, die an der Palette 5 befestigt sind. Diese Stifte werden in hochgenau gefertigte Bohrungen eingesetzt und legen sich an zugeordneten Anschlagflächen am Deckel 3 des Schnellspannzylinders an. Wie bereits eingangs ausgeführt, ist die Anzahl der verwendeten Stifte 10 von der Höhe der Belastung abhängig.

Die gesamte Platte 1 kann auf einem Tisch 12 einer Werkzeugmaschine befestigt werden.

In der Draufsicht nach Figur 2 wird deutlich, daß die Stifte 10 an gegenüberliegenden Ecken des Deckels 3 vorgesehen sind. Es ist auch deutlich der Ansatz 11 erkennbar, der im gezeigten Ausführungsbeispiel kreisrund ausgeführt ist.

Es ist selbstverständlich ebenfalls möglich, nicht nur ein einziges Werkstück 9 zu befestigen, sondern auch mehrere Werkstücke. Die Befestigung kann entweder, wie dargestellt, über Schrauben erfolgen; es kann aber auch jede andere geeignete Befestigungsart verwendet werden.

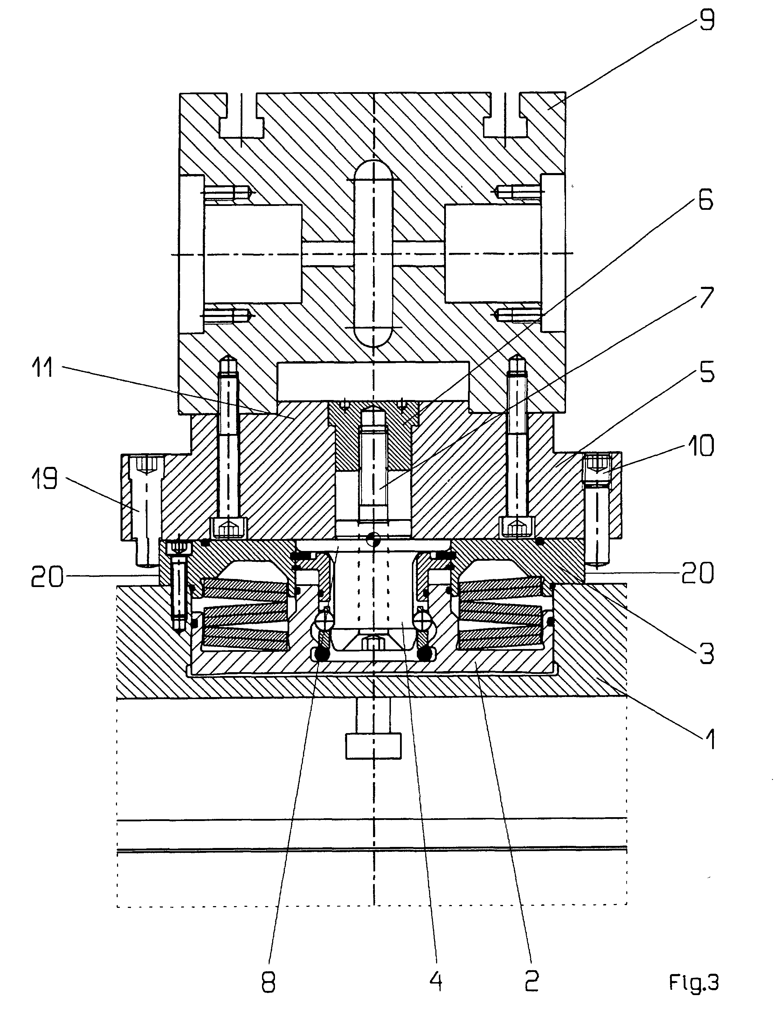

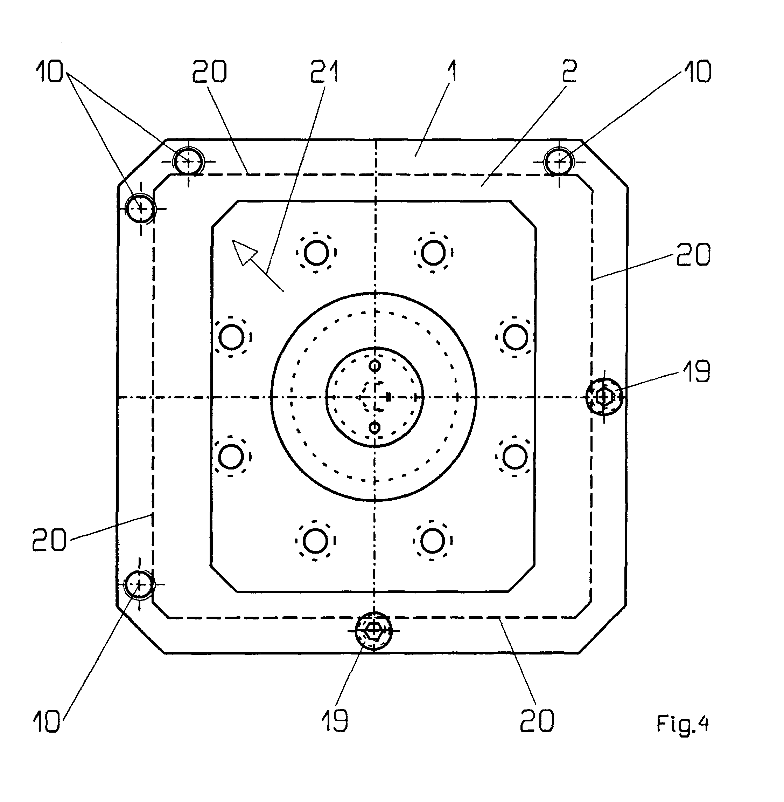

Die Figuren 3 und 4 zeigen eine spezielle Ausführungsform, bei der an zwei von vier Seiten die Stifte 19 der Verdrehsicherung exzentrisch ausgebildet sind.

In Figur 3 ist der linke Stift 19 so dargestellt, daß der Exzenter deutlich erkennbar ist. Der rechte Stift 10 ist als gewöhnlicher runder Stift ausgebildet. Zur Fixierung der Palette 1 in dieser Ausführungsform genügt es, wenn in einer, aus der Draufsicht betrachteten rechteckigen, vorzugsweise quadratischen Anordnung, zwei sich nicht gegenüberliegend angeordnete Stifte exzentrisch ausgebildet sind.

Das Prinzip dieser Fixierung ist aus der Anordnung in der Draufsicht in Figur 4 erkennbar. Dabei wird eine im wesentlichen quadratisch ausgeformte Palette 1 an ihren jeweils gegenüberliegenden Seiten durch eine Dreipunktfixierung festgehalten. Dabei erfolgt eine erste Ausrichtung der Palette durch das übereinanderschieben von Palette 1 und Schnellspannzylinder 3. Die Fixierung der Palette 1 erfolgt über die Einstellung der exzentrisch ausgeformten Stifte 19, so daß sich die Palette gegenüber dem Schnellspannzylinder 2 in Richtung des Pfeiles 21 fixiert. Dabei ist in dieser speziellen Ausführungsform eine Fixierung durch 6 Stifte 10,19 vorgesehen. Diese Anordnung ist jedoch nicht zwingend notwendig, und kann beliebig variiert oder durch weitere Stifte in ihrer Haltekraft verstärkt werden. Es ist also völlig freigestellt, in welcher Anordnung und Anzahl die Verdrehsicherung der Palette ausgeführt wird.

Wichtig bei dieser Anordnung ist der variable Abstand zwischen den runden Stiften 10 und den exzentrisch Stiften 19 der sich durch verdrehen der exzentrischen Stifte 19 ergibt. Durch diese Anordnung eröffnet sich die Möglichkeit die Verdrehsicherung zwischen Palette 1 und Schnellspannzylinder 2 exakt an die Abmessungen der Bauteile anzupassen.

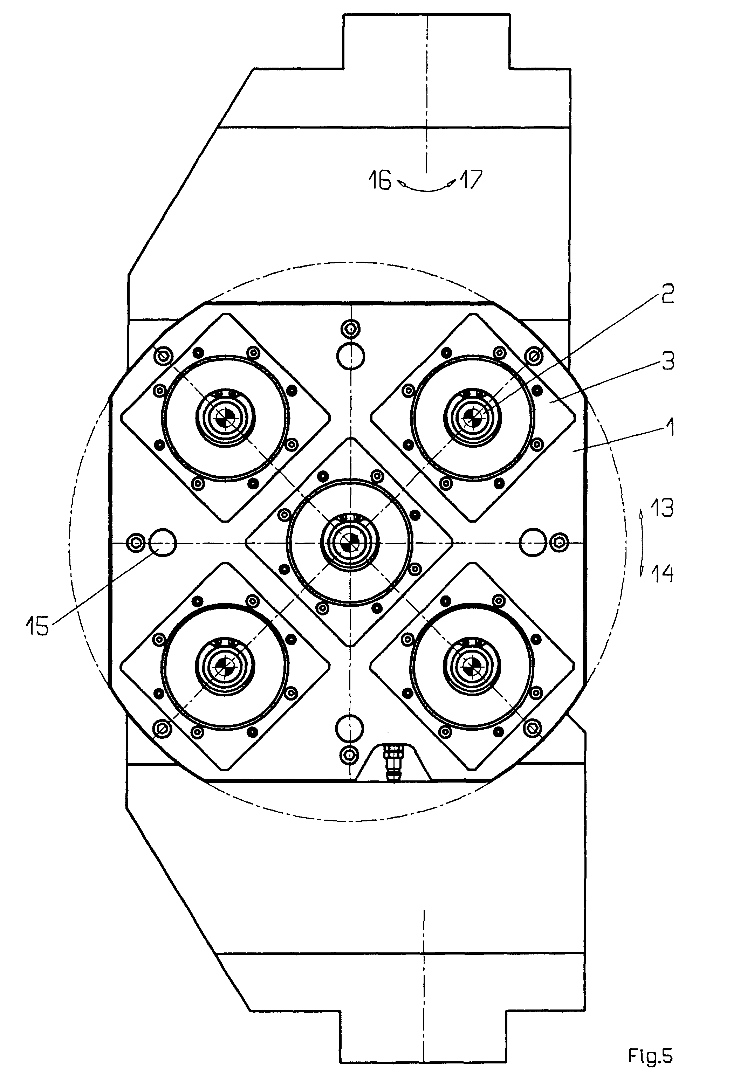

In den Figuren 5 - 9 ist eine Platte 1 gezeigt, die mit fünf im wesentlichen gleich ausgebildeten Schnellspannzylindern 2 versehen ist. In den gezeigten Ausführungsformen ist die Platte 1 auf dem Tisch 12 befestigt und in Pfeilrichtung 13,14 verdrehbar. Der Sperrkreis ist hierbei in Strichlinien angedeutet.

Die Fixierung der Platte 1 auf dem Tisch 12 kann hierbei entweder über Paßstifte 15 mit zugeordneten Schrauben erfolgen; es ist aber ebenfalls möglich, die Platte 1 wiederum mit einem oder mehreren Einzugsnippeln zu versehen und diese in zugeordneten Schnellspannzylindern des Tisches 12 aufzunehmen.

Um die Einsatzmöglichkeiten zu erhöhen, kann neben der Verdrehung in Pfeilrichtungen 13,14 zusätzlich ein Verschwenken in Pfeilrichtung 16,17 vorgesehen sein.

Die Schnellspannzylinder 2 können hierbei über einen schematisch dargestellten Hydraulikanschluß mit Drucköl versorgt werden, um das Einziehen der Einzugsnippel 4 zu bewirken.

Figur 5 zeigt eine Ansicht, bei der noch keine Paletten 5 aufgesetzt sind. Es ergeben sich vielfältige Kombinationsmöglichkeiten. So können z.B. die oberen beiden Schnellspannzylinder 2 jeder für sich einzeln oder mit einer gemeinsamen Palette bestückt werden. Ebenso können die Diagonalen verwendet werden; es ist auch möglich, jeden Schnellspannzylinder 2 einzeln zu verwenden.

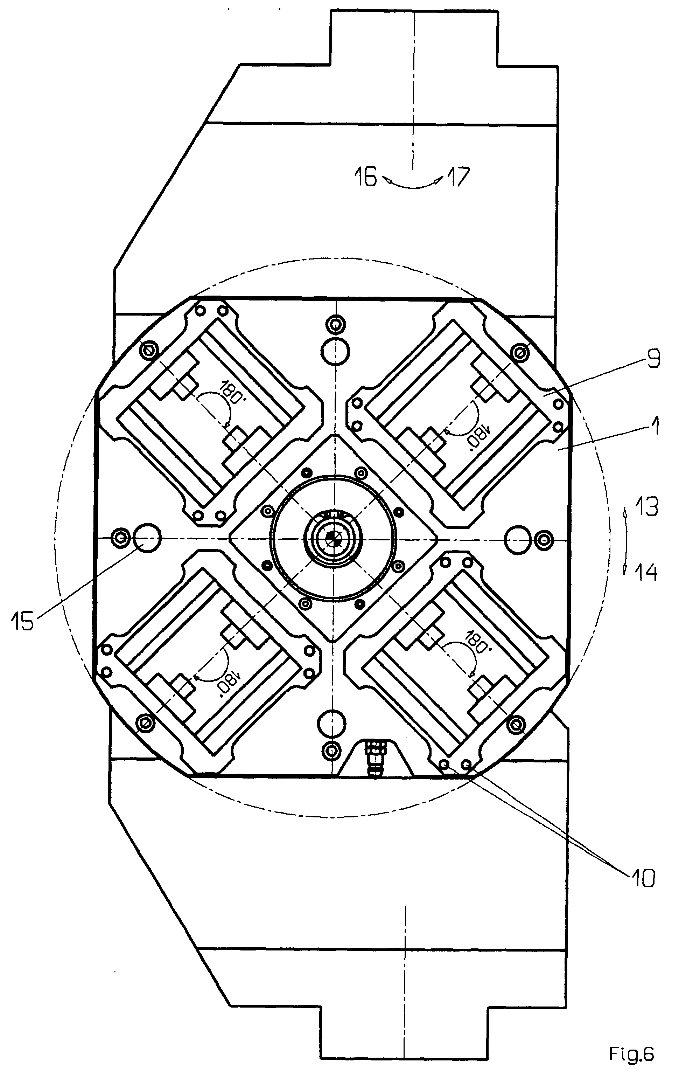

Die Ausführungsform gemäß Figur 6 zeigt eine Bestückung der Platte 1 mit insgesamt vier Werkstücken, wobei der Mittelplatz frei bleibt. Jedes dieser Werkstücke kann somit an den drei außen liegenden Seiten sowie an der Oberseite bearbeitet werden, ohne daß ein Umspannen erfolgen muß. Mit einem entsprechend kleinbauenden Kopf kann es darüber hinaus ebenfalls möglich sein, auch die Innenseite zu bearbeiten.

Es wird hierbei zunächst jede Seite eines ersten Werkstücks bearbeitet, anschließend wird die Platte 1 z.B. in Pfeilrichtung 13 um 90° verdreht, worauf das zweite Werkstück bearbeitet wird. Sobald alle Werkstücke 9 bearbeitet worden sind, können sie von Hand um 180° verdreht werden, um auch die bisher innen liegenden Seite zu bearbeiten. Je nach den Anforderungen kann auch eine andere Bearbeitungsfolge vorgesehen sein.

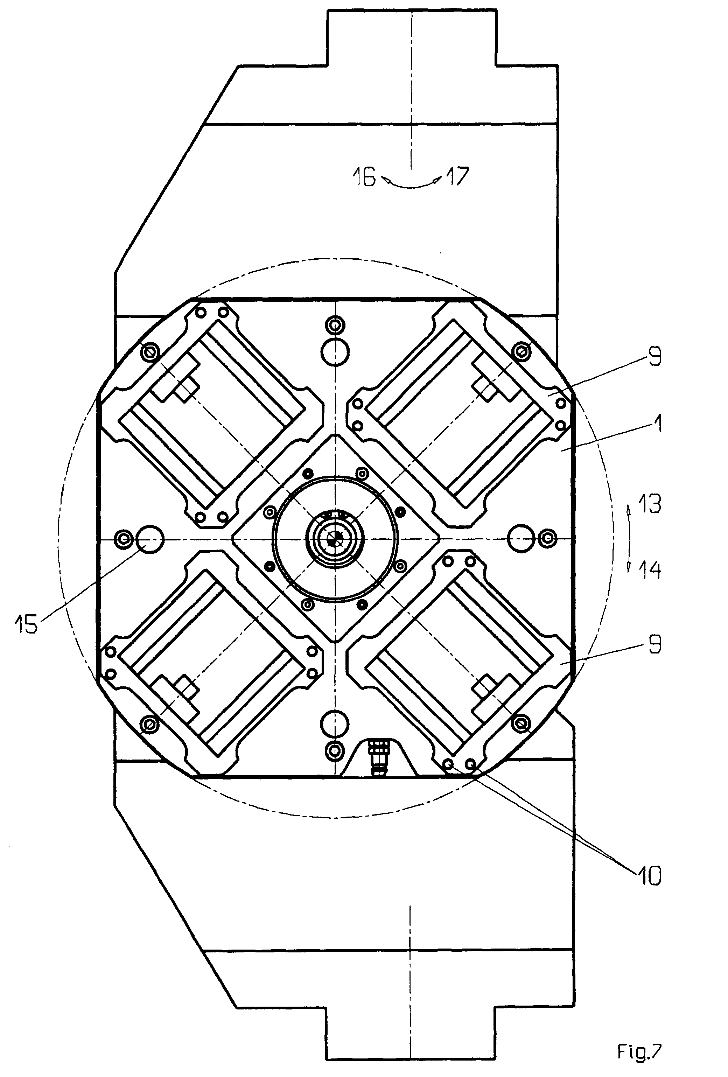

Figur 7 zeigt Werkstücke, bei denen eine derartige Verdrehung nicht erforderlich ist. Der Unterschied gegenüber Figur 6 liegt darin, daß die Innenseite nicht bearbeitet wird, wie sich aus den schematisch dargestellten Bohrungen gemäß Figur 6,7 ergibt.

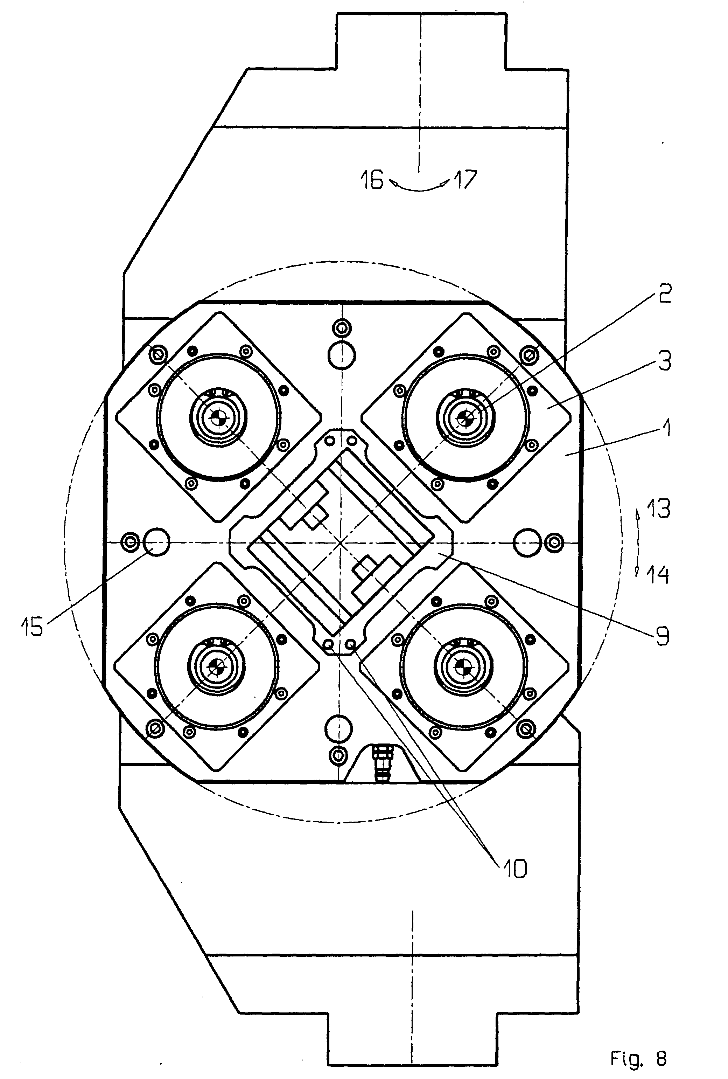

In der Ausführungsform gemäß Figur 8 ist lediglich ein einziges Werkstück 9 zentrisch aufgespannt. Dieses Werkstück kann ohne umspannenden Vorgang an fünf Seiten bearbeitet werden.

Die Ausführungsformen nach den Figuren 6 - 8 ermöglichen wesentlich geringere Umspannzeiten. Insbesondere in der Aufspannung nach den Figuren 7 und 8 kann ohne jegliches Umspannen durchgehend bearbeitet werden. Die Umrüstzeiten der Maschine reduzieren sich beträchtlich.

Figur 6 erfordert lediglich ein manuelles Umspannen, das ohne größeren Zeitaufwand vorgenommen werden kann.

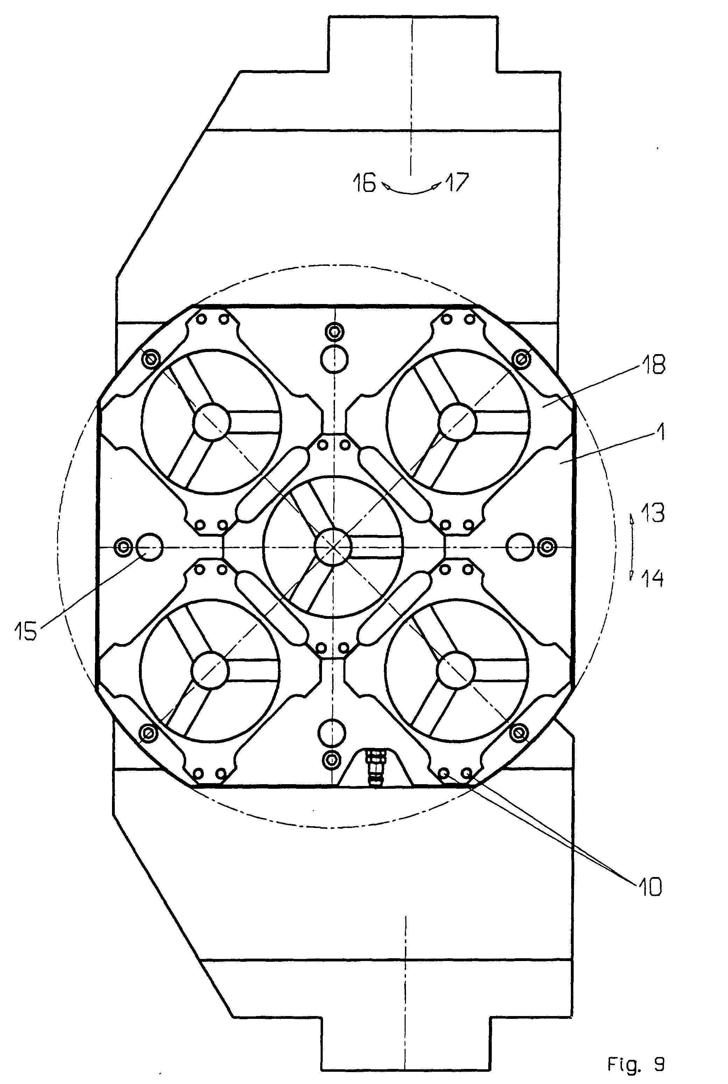

In der Ausführungsform nach Figur 9 sind anstatt der Paletten 5 Backenfutter 18 vorgesehen. Diese Backenfutter 18 können z.B. auf zugeordneten, etwas abgewandelten Paletten entsprechend Figur 1 mit Schrauben oder auf andere Art und Weise befestigt werden. Die Ausführungsform nach Figur 9 ermöglicht es, beispielsweise 5 Werkstücke gleichzeitig zu bearbeiten, bei denen lediglich eine Bearbeitung von der Oberseite her vorgesehen ist, wie z.B. das Einbringen von Bohrungen in Wellen. Auch hier ist keinerlei Umspannen mehr erforderlich.

Durch eine geeignete Ausgestaltung der Schnellspannzylinder 2 bzw. deren Deckel 3 kann somit erreicht werden, daß eine einzige Palette mit einem einzigen Einzugsnippel verdrehsicher gehalten wird. Gleichzeitig können aber wie bisher mehrere Schnellspannzylinder zusammenwirken, um eine einzige Palette zu spannen.

Insgesamt ergibt sich die Möglichkeit, mit wesentlich kleineren Paletten bei geringerem Fertigungsaufwand zu arbeiten.

### ZEICHNUNGSLEGENDE

- 1.: Platte
- 2.: Schnellspannzylinder
- 3.: Deckel
- 4.: Einzugsippel
- 5.: Palette
- 6.: Gegenhalter
- 7.: Gewindestange
- 8.: Ringflansch
- 9.: Werkstück
- 10.: Stift
- 11.: Ansatz
- 12.: Tisch
- 13.: Pfeilrichtung
- 14.: Pfeilrichtung
- 15.: Stift
- 16.: Pfeilrichtung
- 17.: Pfeilrichtung
- 18.: Backenfutter
- 19.: Stift
- 20.: Anlagefläche
- 21.: Pfeil

## Patentansprüche

1. Vorrichtung zum Spannen und lagerichtigen Positionieren von Paletten, wobei zum Einspannen ein mit einem Schnellspannzylinder (2) zusammenwirkender Einzugsnippel (4) vorhanden ist, und eine Verdrehsicherung zwischen der Palette (5) und dem Schnellspannzylinder (2) vorhanden ist, die im wesentlichen aus Stiften (10) besteht, **dadurch gekennzeichnet, daß** sich die stifte (10) an entsprechender Anlagefläche (20) am Außenumfang des Schnellspannzylinders (2) oder der Palette (5) anlegen.

2. Vorrichtung nach Anspruch 1, **dadurch gekennzeichnet, daß** die Verdrehsicherung aus einer Kombination von Stiften besteht, wobei ein Teil der Stifte vorzugsweise rund ausgebildet ist (10), und ein weiterer Teil der Stifte im Berührungsbereich mit der Anlagefläche (20) exzentrisch ausgebildet ist (19).

3. Vorrichtung nach den Ansprüchen 1 oder 2, **dadurch gekennzeichnet, daß** die Anordnung der Stifte in der Weise erfolgt, daß sie bei rechteckiger Form des Deckels (3) des Schnellspannzylinders (2) so angeordnet sind, daß sie diese rechteckige Form des Deckels umschließen, wobei runde Stifte (10) und exzentrische Stifte (19) sich gegenüberliegend angeordnet sind, wobei pro Seite nur eine Art von Stiften (10 oder 19) angeordnet ist.

4. Vorrichtung nach den Ansprüchen 1 oder 2, **dadurch gekennzeichnet, daß** die Anordnung der Stifte in der Weise erfolgt, daß sie bei dreieckiger Form des Deckels (3) des Schnellspannzylinders (2) so angeordnet sind, daß sie diese dreieckige Form des Deckels umschließen, wobei runde Stifte (10) und exzentrische Stifte (19) so angeordnet sind, daß mindestens auf einer Seite ein exzentrischer Stift (19) angeordnet ist, und pro Seite nur eine Art von Stiften (10 oder 19) angeordnet ist.

5. Vorrichtung nach den Ansprüchen 1 bis 4, **dadurch gekennzeichnet, daß** die Stifte (10,19) an der Palette (1) angeordnet sind, und daß die zugeordneten Anlageflächen (20) am Deckel (3) des Schnellspannzylinders (2) angeordnet sind.

6. Vorrichtung nach den Ansprüchen 1 bis 4, **dadurch gekennzeichnet, daß** die Stifte (10,19) am Deckel (83) des Schnellspannzylinder (2) angeordnet sind, und daß die zugeordneten Anlageflächen (20) an der Palette (1) angeordnet sind.

7. Vorrichtung nach einem der Ansprüche 1 bis 6, **dadurch gekennzeichnet, daß** eine Zentrierung des Werkstücks (9) gegenüber der Palette (5) durch zugeordnete Anschlagflächen (11) erfolgt.

8. Vorrichtung nach einem der Ansprüche 1 bis 7, **dadurch gekennzeichnet, daß** auf der Palette (5) mehrere Werkstücke (9) befestigt sind.

## Claims

1. Device for clamping and positioning pallets in the correct position, wherein a feed fitting (4) is provided for clamping, which interacts with a quick-action clamping cylinder (2), and wherein a means is provided for preventing relative rotation between said pallet (5) and said quick-action cylinder (2), which means consists essentially of pins (10), **characterised in that** said pins (10) are caused to bear against a respective bearing surface (20) on the outside periphery of said quick-action cylinder (2) or of said pallet (5).

2. Device according to Claim 1, **characterised in that** said means preventing relative rotation consists of a combination of pins, with one part of said pins preferably presenting a round configuration (10) and another part of said pins presenting an eccentric configuration (19) in the area of contact with said bearing surface (20).

3. Device according to the Claims 1 or 2, **characterised in that** said pins are disposed in a manner that in the event of a rectangular shape of the cover (3) of said quick-action cylinder (2) they are arranged so as to enclose this rectangular shape of the cover, with round pins (10) and eccentric pins (19) being disposed in opposition to each other, with only one type of pins (10 or 19) being disposed per side.

4. Device according to the Claims 1 or 2, **characterised in that** said pins are disposed in a manner that in the event of a triangular shape of the cover (3) of said quick-action cylinder (2) they are arranged so as to enclose this triangular shape of the cover, with round pins (10) and eccentric pins (19) being disposed in a way that at least one eccentric pin (19) is disposed on at least one side and that only one type of pins (10 or 19) is disposed per side.

5. Device according to the Claims 1 to 4, **characterised in that** said pins (10, 19) are disposed on said pallet (1) and that the associated bearing surfaces (20) are disposed on the cover (3) of said quick-action cylinder (2).

6. Device according to the Claims 1 to 4, **characterised in that** said pins (10, 19) are disposed on the cover (83) of said quick-action clamping cylinder (2) and that the associated bearing surfaces (20) are formed on said pallet (1).

7. Device according to any of the Claims 1 to 6, **characterised in that** the work piece (9) is centred in opposition to said pallet (5) by means of associated bearing surfaces (11).

8. Device according to any of the Claims 1 to 7, **characterised in that** several work pieces (9) are fastened on said pallet (1).

## Revendications

1. Dispositif à serrer et positionner des palettes en position correcte, dans lequel un raccord à vis d'approche (4) est disposé pour le serrage, qui agit ensemble avec un cylindre de serrage à action rapide (2), et dans lequel un moyen est arrangé à empêcher une rotation relative entre ladite palette (5) et ledit cylindre à action rapide (2), ce moyen étant essentiellement constitué par des boulons (10), **caractérisé en ce que** lesdits boulons (10) sont causés à s'appuyer contre une surface d'appui (20) respective sur la périphérie extérieure dudit cylindre à action rapide (2) ou de ladite palette (5).

2. Dispositif selon la revendication 1, **caractérisé en ce que** ledit moyen empêchant une rotation relative consiste en une combinaison de boulons, à une partie desdits boulons présentant, de préférence, une configuration ronde (10) et une autre partie desdits boulons présentant une configuration excentrique (19) dans la zone de contact avec ladite surface d'appui (20).

3. Dispositif selon les revendications 1 or 2, **caractérisé en ce que** lesdits boulons sont disposés de façon, qu'au cas d'une forme rectangulaire du couvercle (3) dudit cylindre à action rapide (2), ils soient disposés d'une manière à entourer cette forme rectangulaire du couvercle, aux boulons ronds (10) et aux boulons excentriques (19) étant disposés l'un en opposition à l'autre, à un type de boulons seulement (10 ou 19) étant disposé par côté.

4. Dispositif selon les revendications 1 ou 2, **caractérisé en ce que** lesdits boulons sont disposés de façon, qu'au cas d'une forme triangulaire du couvercle (3) dudit cylindre à action rapide (2), ils soient disposés d'une manière à entourer cette forme triangulaire du couvercle, aux boulons (10) ronds et aux boulons excentriques (10) étant disposés de façon, qu'au moins un boulon excentrique (19) soit disposé d'au moins un côté, et **en ce que** seulement un type de boulons (10 ou 19) est disposé par côté.

5. Dispositif selon les revendications 1 à 4, **caractérisé en ce que** lesdits bou-Ions (10, 19) sont disposés sur ladite palette (1), et **en ce que** les surfaces d'appui (20) affectées sont disposées sur le couvercle (3) dudit cylindre à action rapide (2).

6. Dispositif selon les revendications 1 à 4, **caractérisé en ce que** lesdits boulons (10, 19) sont disposés sur le couvercle (83) dudit cylindre de serrage à action rapide (2), et **en ce que** les surfaces d'appui (20) affectées sont formées sur ladite palette (1).

7. Dispositif selon une quelconque des revendications 1 à 6, **caractérisé en ce que** la pièce à usiner (9) est centrée en opposition à ladite palette (1) moyennant des surfaces d'appui (11) affectées.

8. Dispositif selon une quelconque des revendications 1 à 7, **caractérisé en ce que** plusieurs pièces à usiner (9) sont fixées sur ladite palette (1).
